# EUROPEAN PATENT SPECIFICATION

(11) **EP 1 625 948 B1**
(45) Date of publication and mention of the grant of the patent: **08.04.2015**
(21) Application number: 04388054.1
(22) Date of filing: 10.08.2004
(51) Int. Cl.: B44D 3/12, B29C 45/00, B65D 43/00, B65D 81/00

(54) **A packaging, and a mould and a method for making the packaging**
Verpackung, Form und Verfahren zur Verpackungsherstellung
Emballage, moule et méthode pour produire le dit emballage

(43) Date of publication of application: 15.02.2006
(73) Proprietor: Superfos A/S, 2630 Taastrup (DK)
(72) Inventor: Stensbøl, Michael, 3500 Vaerløse (DK); Lejre, Anne-Lise Høg, 2630 Taastrup (DK); Pedersen, Søren, 2630 Taastrup (DK); Pudselykke, Lars, 4300 Holbaek (DK)
(74) Representative: Guardian IP Consulting I/S

(56) References cited:
- WO-A1-00/27725
- DE-A1- 3 435 992
- US-A- 5 492 242

## Description

The present invention relates to a packaging for liquid paint or the like, produced from a polymeric resinous material and having surfaces for enhanced adhesion of a film of said liquid paint or the like deposited thereon. Specifically, the invention concerns a packaging including a plastic container and a plastic lid, the container having a bottom and a peripheral side wall extending from said bottom and defining opposite said bottom a peripheral rim, the side wall having connecting means for attaching the plastic lid to the container in a tight relationship, the lid and the side wall tightly abutting each other in a peripheral sealing area adjacent the rim when the lid is placed on the container. By paint and the like is meant liquid surface coatings, i.a. paints, enamels, varnishes and lacquers. The paint may be based on water or a solvent.

Injection moulded liquid paint containers and lids manufactured from polymeric resinous materials such as polyethylene or polypropylene exhibit the problem of having a low to almost negligible surface adhesion for dried paint. On certain surface areas, such as the underside of the lid and the inside container surface exposed above the liquid paint level, this low adhesion can be particularly deleterious. Liquid paint splashes and coats these surfaces during shipment of the packaging with the paint, during mixing of the paint, such as when the packaging holding paint is placed in a vibrator in the paint store, and during the actual painting process where the painter may temporarily leave his brush resting on the underside of the lid.

Often, before the paint is initially used, or reused after partial application, this surface coating dries. Later removal of the lid, or subsequent simple mixing of the liquid paint, for example by stirring with a wooden paddle, can lead to chipping, flaking and peeling of the dry paint, and lead to deposition of flakes etc. into the liquid paint. Generally, those flakes are substantially unaltered by conventional mixing techniques and thus brush out on application of the paint as unattractive specks and lumps.

Various proposals have been advanced in an attempt to solve the aforementioned problem. WO 02/94 582 and WO 01/32 442 both suggest providing a paint container with a coating or otherwise treating the inside surface of the finished container such that the adhesion for the dried paint is increased. WO 00/27 725 suggests forming the inside of a paint container and the underside of the lid with a lining of a material capable of retaining a layer of paint thereon whereby flakes of the paint do not fall into the body of the paint. WO 00/27 725 also discloses integrally moulding a series of spaced apart concentric ribs into a plastics container between the top of the container proximate the sealing means (lid) to at least the formulation level. The texturing disclosed in WO 00/27 725 extends at least 1-10 microns (0.001-0.01) from the internal surface of the container.

The above prior art containers and lids involve the problem that the processes leading to their manufacture are complicated giving rise to high manufacturing costs, making the proposed solutions less attractive from a commercial point of view. Hence, there is a need for a packaging that not only provides for a high adhesion for dried paint but which can also be made in a simple and cost-effective way.

The aforementioned problems are solved by the packaging defined in claim 1. In use, any paint deposited on the container side wall sticks to the side wall through the increased surface area defined by the surface of the side wall projections formed in the injection moulding process, and will remain firmly anchored thereto when dry. A mould for forming a container having these properties is defined in claim 12.

Surprisingly, it is possible to remove from an injection mould male part after the moulding a plastic paint container having projections on the inside surface of the side wall sufficient for retaining a layer of dry paint thereon, thus permitting the packaging to be manufactured in the desired cost-efficient way while still ensuring a high degree of adhesion to dried paint on the inside surface of the container. Preferably, the lid is also manufactured by injection moulding.

Preferably, the 3D roughness Rₐ of the inside of the container side wall is at minimum 40µm and at most 70µm. The 3D roughness Rₐ is determined in accordance with DIN 4768, ISO/DIS 4287/1, DIN 4762/1 and DIN 4774.

The embodiment of claim 7 allows for an adhesion on the lid of paint that splashes up into the narrow annular space between the lid and the side wall during mixing of the paint, such as in a vibrator at a paint store. Although a surface with the roughness defined in claim 7 may provide for an adhesion slightly inferior to the adhesion provided by the underside of the lid, this embodiment still provides for an adherence in an area of the lid where establishing a greater roughness in the injection moulding process would be complicated.

The embodiment of claim 9 allows for a highly reliable retention of most paints on the exposed surface of container while still permitting removal of the container from the injection mould.

The invention will now be discussed in further details with reference to preferred embodiments shown in the drawing.
Fig 1a shows a plastic lid for a plastic container, seen from below, and provided with a pattern of projections according to one embodiment of the invention
Fig. 1b is a sectional view of the encircled part of the lid shown in fig. 1a,
Fig. 2a is a cross-sectional view of a container with a lid applied thereon,
Fig. 2b is an enlarged sectional view of the encircled part of the lid shown in fig. 2a,
Fig. 2c is an enlarged sectional view of the encircled part of the container side wall shown in fig. 2a,
Fig. 3a is a perspective sectional view of the lid of fig. 1a,
Fig. 3b is a side view of the packaging in the sealing area,
Fig. 4a shows a front view of a part of the inside surface of the container side wall provided with a pattern of projections in accordance with a second embodiment of the invention.
Fig. 4b shows a sectional view of the projections according to the second embodiment,
Fig. 5 is a 3D view of a part of the inside surface of a container side wall according to a third embodiment of the invention, having surface projections formed through the use of a mould male part with a peripheral surface that has been subjected to photo etching, and
Fig. 6 shows an exemplary male part for an injection mould for use in making the container part of the packaging.

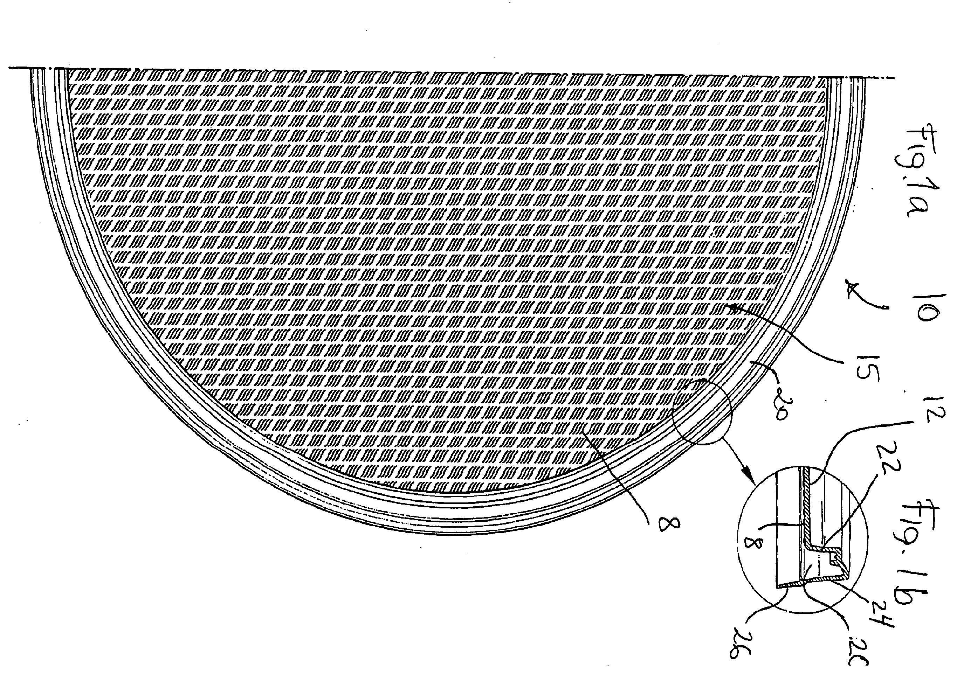

Fig. 1 shows a plastic lid 10 for a container for a packaging according to the invention. The underside of the lid 10 that faces the interior of the packaging when the lid 10 is applied on the container is provided with a plurality of groups 15 of identical projections 8. Each group 15 comprises four such projections, and each projection 8 has in this example an S-like configuration. The projections 8 define between each other indentations or recesses, with the indentations being wider in areas between the groups 15 of projections than between the individual projections 8 of each group 15.

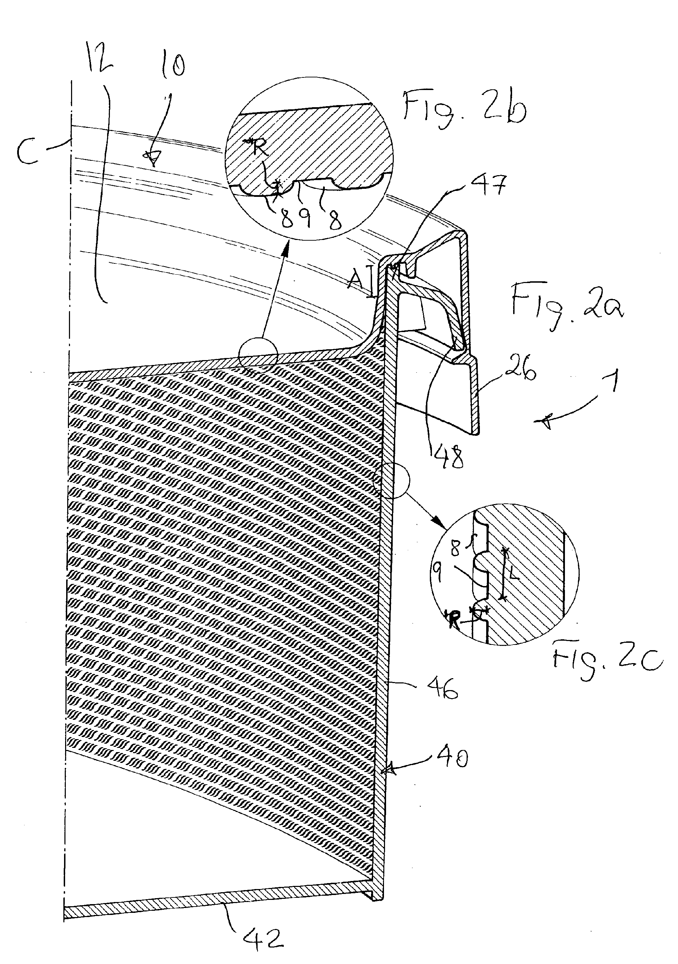

The lid 10 has a peripheral groove 20 defined by a smaller radius wall 22 and a larger radius wall 24, and extending around a central part 12 of the lid 10. The larger radius wall 24 has connecting means 26 cooperating with connecting means on the container to allow for the lid 10 to be attached to the container in a tight relationship, and a peripheral area of the surface of the smaller radius wall 22 facing the larger radius wall 24 defines together with the rim of the container a peripheral sealing area, as shown in fig. 2a.

Fig. 2a shows the packaging 1 with the lid 10 applied on a container 40 having a bottom 42, a side wall 46 extending from the bottom 42 and having a peripheral rim 47. The container 40 is slightly conical with the wall 46 typically defining a small angle in the order of 0,2°-5°, preferably 1 °-3°, with respect to the central axis C of the container 40, and may be provided with a handle. Paint containers are typically manufactured from polyethylene, preferably polypropylene, such that the container will substantially maintain its shape in use.

Connecting means in the form of a peripheral flange 48 on the outside surface of wall 46 at the rim 47 cooperate with the aforementioned connecting means 26 of the lid to keep the lid 10 attached to the container 40 in a tight relationship through the connecting means 26 engaging the flange 48 by snap-action. In this position, a peripheral area of the inside surface of the wall 46 seals against the aforementioned peripheral area of the surface of the smaller radius wall 22, thus providing a peripheral sealing area A.

Figs. 2b and 2c show an enlarged sectional view of the lid 10 and the side wall 46, respectively, with the projections 8 and the intermediate indentations or recesses 9 being visible. The S-like projections 8 may eg. have a length L in the order of 2-4 mm, and a height R in the order of eg. 0,1 mm - 0,25 mm. As shown, on the side wall 46 the projections 8 are formed in an area extending from but not including the peripheral area A to the bottom 42. Such a pattern of projections 8 would provide the side wall 46 with a 3D roughness Rₐ in the order of 58µm.

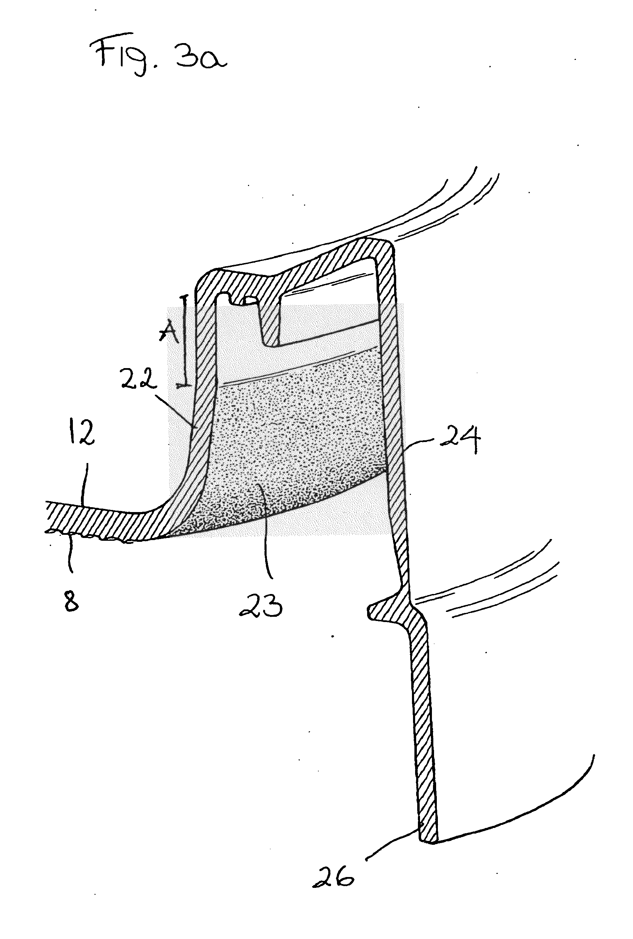

Fig. 3a shows the groove 20 for receiving the peripheral rim 47. An area 23 of the smaller radius wall 22 extends below the peripheral sealing area A, i.e. in the narrow annular gap between the lid and the side wall. It may be difficult to establish in this area 23 the same roughness as on the underside of the lid 10 although some degree of roughness is certainly desired in this area due to paint being deposited here in the course of mixing the paint in a vibrator. Hence, the mould forming the lid 10 may be adapted to establish in this area 23 a different pattern of projections with a 3D roughness Rₐ of at minimum 10µm and at most 20µm, and with a similar maximum height.

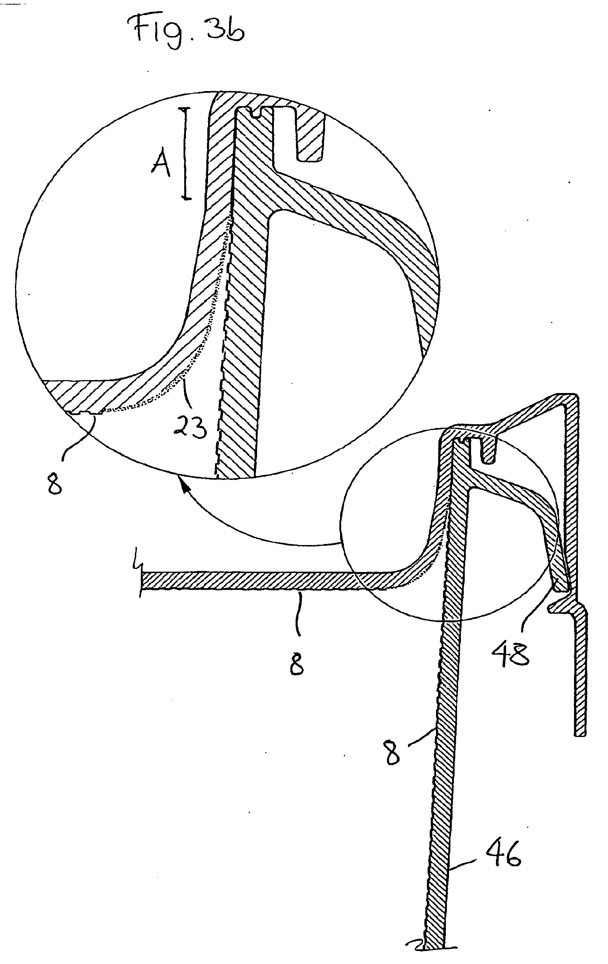

Fig. 3b shows the sealing area A of the packaging 1, with the projections 8 on side wall 46 preferably extending up, but not into, to the peripheral area of the side wall 46 abutting the outer surface of the smaller radius wall 22 of the lid 10 in the sealing area A.

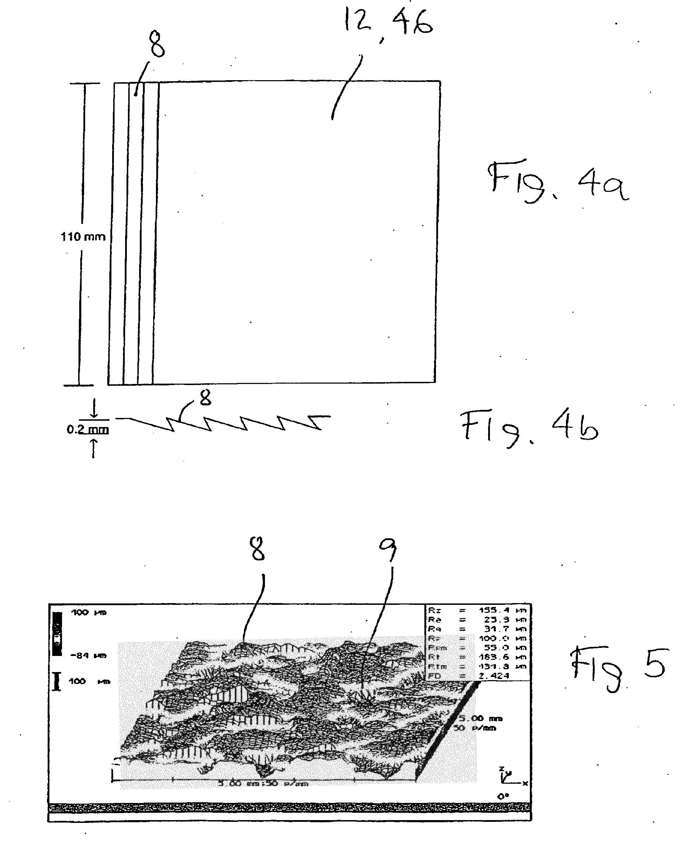

Fig. 4a shows an alternative pattern of projections 8 that may be formed on the inside of side wall 46, and also on the underside of the lid 10 although the lid may be provided with any other configuration of the projections. The projections 8 extend in the general direction of the central axis C of the container, and may be in cross-section as shown in fig. 4b, i.e. with a barb-like structure providing a strong adherence or anchoring of the dried paint to the side wall 46.

Fig. 5 shows yet another, more irregular pattern of projections 8 that may alternatively be formed on the side wall 46 in the injection moulding process, and that may also provide the surface with the same roughness Rₐ mentioned above.

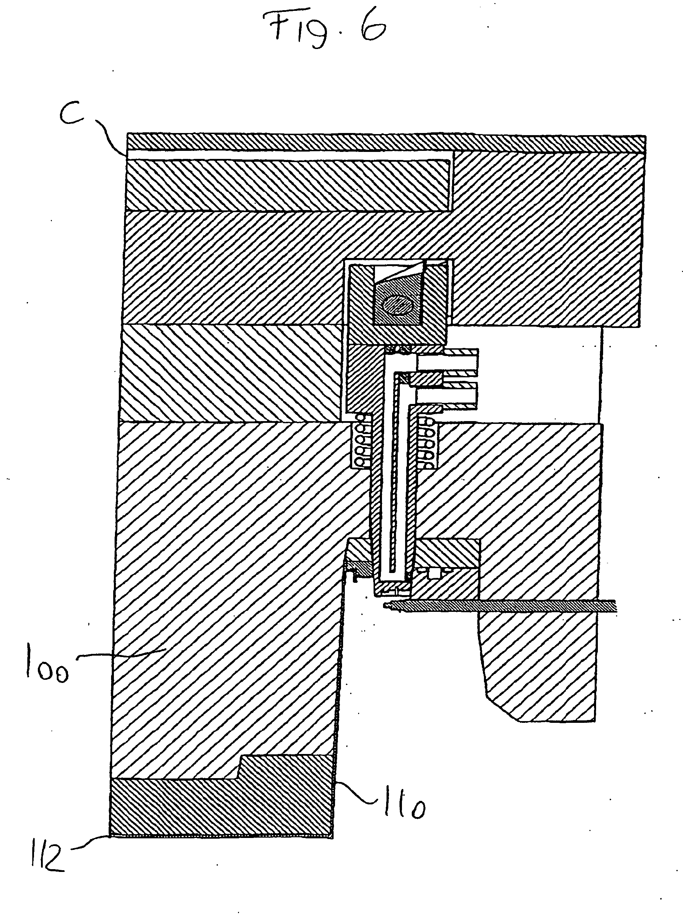

Fig. 6 shows one half (the central line C being the leftmost line) of a solid, non-collapsible conical male part 100 for a mould for injection moulding, the male part 100 defining together with a female part (not shown) a cavity for making a container according to the invention. The male part 100 has a first conical surface 110 defining the inside surface of the peripheral side wall 46 of the container 40, and the male part 100 is provided with a pattern of indentations, preferably evenly distributed across the entire first surface.

The indentations are such as to provide the male part 100 with a 3D roughness Rₐ greater than about 15µm, preferably greater than 20µm, more preferably greater than 40µm and most preferably greater than 53 µm, and no more than 70 µm, for providing the required degree of roughness of the inside of the peripheral side wall 46 of the container in the injection moulding. The male part 100 may have the aforementioned indentations only up to a peripheral region forming the rim 47 of the container. In one embodiment, the first surface 110 has recesses with a depth R of 0,1 mm - 0,35 mm, all recesses all having the same depth, or essentially the same depth. The male part 100 may as shown be provided with a template 112 forming the first surface 110 and having the indentations, and the indentations or roughness may be provided by a sandblasting or etching the male part 100 surface, or the surface of the template. The pattern of indentations formed in the template 112 or the male part may be as shown schematically in fig. 5 for rendering a similar structure on the inside of side wall 46, or the male part 100 may carry any pattern resulting in the desired image on the wall 46, such as the image shown in figs. 2a and 4b.

After completion of the injection of the plastics material in the cavity between the male and female parts of the mould, the finished container with indentations on the inside of the side wall 46 may be pulled off the male part 100, even though projections 8 are formed on substantially the entire inner surface of the wall 46 abutting the first surface 110 of the male part 100.

## Claims

1. A packaging (1) including an injection moulded plastic container (40) and a plastic lid (10), said container (40) having a bottom (42) and a peripheral side wall (46) extending from said bottom and defining opposite said bottom a peripheral rim (47), said side wall having connecting means (26) for attaching said plastic lid (10) to said container in a tight relationship, said lid and said side wall tightly abutting each other in a peripheral sealing area (A) adjacent said rim (47) when said lid is attached to said container, wherein the lid and the side wall have on the surfaces thereof facing the inside of the packaging (1) a number of projections (8), said projections (8) on said side wall defining a number of side wall recesses (9) and being integrally formed in the injection moulding process by the plastic material forming the container side wall (46) flowing into mould recesses formed in said injection mould, such that at least an area, and preferably the entire area, of said surfaces facing the inside of the packaging have a 3D roughness Rₐ greater than about 15µm and wherein:
a) said side wall (46) recesses (9) have a depth (R) of 0,1 mm-0,35mm or
b) at least an area, and preferably the entire area, of said surfaces of the peripheral side wall facing the inside of the packaging has a 3D roughness Rₐ of at most 70µm.

2. A packaging according to claim 1, **characterized in that** at least an area, and preferably the entire area, of said surfaces facing the inside of the packaging having a 3D roughness Rₐ of at minimum 40µm and at most 70µm.

3. A packaging according to any of the preceding claims, **characterised in** said lid (10) being injection moulded.

4. A packaging according to any of the preceding claims, said projections (8) being substantially identical, or identical, in shape and being uniformly distributed on said surfaces.

5. A packaging according to any of the preceding claims, said peripheral sealing area (A) being inside said side wall (46).

6. A packaging according to the preceding claim, said projections (8) on said side wall (46) being formed solely in the area extending from said peripheral sealing area (A) towards said bottom (42).

7. A packaging according to claim 5 or 6, said lid (10) including a peripheral groove (20) for receiving said peripheral rim (47), said groove (20) being defined by a smaller radius wall (22) and a larger radius wall (24), said smaller radius wall (22) defining at least in part together with said side wall (46) said peripheral sealing area (A), said smaller radius wall (22) having outside said peripheral sealing area (A) a rough surface having a 3D roughness Rₐ of at minimum 10µm and at most 20µm.

8. A packaging according to any of the preceding claims, said container having a central axis (C) extending essentially perpendicular to said bottom (42), said peripheral side wall (46) being conical and sloping at an angle with respect to said central axis (C) of 0,2°-5°, preferably 1°-3°, with the container (40) having the smaller radius at said bottom (42).

9. A packaging according to any of the preceding claims, said projections (8) on said side wall (46) being generally orientated in the direction of said central axis (C).

10. A packaging according to any one of the preceding claims, said recesses (9) all having essentially the same depth (R), or the same depth.

11. A packaging according to any of the preceding claims, said projections (8) having a barb-like configuration.

12. A mould for the injection moulding of a paint container (40) having a bottom and a peripheral side wall (46) extending from said bottom and defining opposite said bottom a peripheral rim, said side wall having peripheral connecting means for attaching a plastic lid to the container, said mould including a female part and a cylindrical or conical male part (100) for defining an injection mould cavity, wherein said male part (100) has a peripheral first surface defining the inside surface of said peripheral side wall, said first surface (110) having a plurality of indentations (9) along the periphery for forming projections (8) on said peripheral side wall (46) during said injection moulding, and where the indentations are such as to provide the male part with a 3D roughness Rₐ greater than about 15 µm and no more than 70 µm or where the indentations have a depth of 0.1mm-0.35mm.

13. A mould according to claim 12, said first surface (110) having a 3D roughness Rₐ greater than 20µm, more preferably greater than 40µm and most preferably greater than 53µm, for defining said projections (8).

14. A mould according to claim 12 or 13, at least an area, and preferably the entire area, of said first surface (110) having said indentations (9).

15. A mould according to any of claims 12-14, said first surface (110) having a 3D roughness Rₐ of at minimum 40µm and at most 70µm.

16. A mould according to any of claims 12-15, said first surface (110) having the roughness Rₐ only in an area distant from a peripheral region (A) forming said rim (47).

17. A mould according to claim 12, said indentations (9) all having the same depth, or essentially the same depth.

18. A mould according to any of the preceding claims 12-17, said male part (100) having a template (112) forming said first surface (110).

19. A mould according to any of the preceding claims 12-18, said indentations (9) being provided by sandblasting or etching said male part (100).

20. A mould according to any of claims 12-19, said male part having a central axis (C), said first surface (110) being conical and sloping at an angle with respect to said central axis (C) of 1°-3°.

21. A method of making a container having a bottom and a peripheral side wall extending from said bottom and defining opposite said bottom a peripheral rim, said side wall having connecting means for attaching a plastic lid to said container in a tight relationship, said lid and said side wall tightly abutting each other in a peripheral sealing area adjacent said rim when said lid is attached to said container, wherein the side wall (46) has on the surfaces thereof facing the inside of the container a number of projections, said projections (8) on said side wall defining a number of side wall recesses (9) and being integrally formed in the injection moulding process by the plastic material forming the container side wall flowing into mould recesses (9) formed in said injection mould, such that at least an area, and preferably the entire area, of said surfaces facing the inside of the container having a 3D roughness Rₐ greater than about 15 µm and
a) said side wall (46) recesses (9) have a depth (R) of 0.1 mm-0.35mm or
b) at least an area, and preferably the entire area, of said surfaces facing the inside of the container having a 3D roughness Rₐ of at most 70 µm.

## Patentansprüche

1. Verpackung (1), umfassend einen spritzgegossenen Kunststoffbehälter (40) und einen Kunststoffdeckel (10), wobei der Behälter (40) einen Boden (42) und eine periphere Seitenwand (46), die sich von dem Boden aus erstreckt und dem Boden gegenüber einen peripheren Rand (47) definiert, aufweist, wobei die Seitenwand Verbindungsmittel (26) zur dichten Anbringung des Kunststoffdeckels (10) am Behälter aufweist, wobei der Deckel und die Seitenwand in einem dem Rand (47) benachbarten peripheren Dichtungsbereich (A) dicht aneinander anliegen, wenn der Deckel am Behälter angebracht ist, wobei der Deckel und die Seitenwand auf ihren der Innenseite der Verpackung (1) zugewandten Oberflächen eine Reihe von Vorsprüngen (8) aufweisen, wobei die Vorsprünge (8) auf der Seitenwand eine Reihe von Seitenwandaussparungen (9) definieren und in dem Spritzgießverfahren einstückig ausgebildet werden, indem der die Behälterseitenwand (46) ausbildende Kunststoff derart in in der Spritzgießform ausgebildete Formaussparungen fließt, dass wenigstens ein Bereich, vorzugsweise die gesamte Fläche, der der Innenseite der Verpackung zugewandten Oberflächen eine 3D-Rauigkeit Rₐ von mehr als ca. 15 µm aufweist, und wobei:
a) die Aussparungen (9) der Seitenwand (46) eine Tiefe (R) von 0,1 mm - 0,35 mm aufweisen oder
b) wenigstens ein Bereich, vorzugsweise die gesamte Fläche, der der Innenseite der Verpackung zugewandten Oberflächen der peripheren Seitenwand eine 3D-Rauigkeit Rₐ von höchstens 70 µm aufweist.

2. Verpackung nach Anspruch 1, **dadurch gekennzeichnet, dass** wenigstens ein Bereich, vorzugsweise die gesamte Fläche, der der Innenseite der Verpackung zugewandten Oberflächen eine 3D-Rauigkeit Rₐ von mindestens 40 µm und höchstens 70 µm aufweist.

3. Verpackung nach einem der vorangehenden Ansprüche, **dadurch gekennzeichnet, dass** der Deckel (10) spritzgegossen ist.

4. Verpackung nach einem der vorangehenden Ansprüche, wobei die Vorsprünge (8) im Wesentlichen identisch oder identisch in ihrer Form sind und gleichmäßig auf den Oberflächen verteilt sind.

5. Verpackung nach einem der vorangehenden Ansprüche, wobei sich der periphere Dichtungsbereich (A) innerhalb der Seitenwand (46) befindet.

6. Verpackung nach dem vorangehenden Anspruch, wobei die Vorsprünge (8) auf der Seitenwand (46) nur in dem sich vom peripheren Dichtungsbereich (A) in Richtung des Bodens (42) erstreckenden Bereich ausgebildet sind.

7. Verpackung nach Anspruch 5 oder 6, wobei der Deckel (10) eine periphere Nut (20) zur Aufnahme des peripheren Rands (47) umfasst, wobei die Nut (20) durch eine Wand (22) mit kleinerem Radius und eine Wand (24) mit größerem Radius definiert ist, wobei die Wand (22) mit kleinerem Radius wenigstens teilweise zusammen mit der Seitenwand (46) den peripheren Dichtungsbereich (A) definiert, wobei die Wand (22) mit kleinerem Radius außerhalb des peripheren Dichtungsbereichs (A) eine raue Oberfläche mit einer 3D-Rauigkeit Rₐ von mindestens 10 µm und höchstens 20 µm aufweist.

8. Verpackung nach einem der vorangehenden Ansprüche, wobei der Behälter eine sich im Wesentlichen senkrecht zum Boden (42) erstreckende Mittelachse (C) aufweist, wobei die periphere Seitenwand (46) konisch und bezogen auf die Mittelachse (C) mit einem Winkel von 0,2° - 5°, vorzugsweise 1° - 3°, geneigt ist, wobei der Behälter (40) am Boden (42) den kleineren Radius aufweist.

9. Verpackung nach einem der vorangehenden Ansprüche, wobei die Vorsprünge (8) auf der Seitenwand (46) im Allgemeinen in der Richtung der Mittelachse (C) ausgerichtet sind.

10. Verpackung nach einem der vorangehenden Ansprüche, wobei die Aussparungen (9) alle im Wesentlichen die gleiche Tiefe (R) oder die gleiche Tiefe aufweisen.

11. Verpackung nach einem der vorangehenden Ansprüche, wobei die Vorsprünge (8) eine widerhakenartige Ausgestaltung aufweisen.

12. Form zum Spritzgießen eines Farbbehälters (40) mit einem Boden und einer peripheren Seitenwand (46), die sich von dem Boden aus erstreckt und dem Boden gegenüber einen peripheren Rand definiert, wobei die Seitenwand periphere Verbindungsmittel zur Anbringung eines Kunststoffdeckels an dem Behälter aufweist, wobei die Form ein aufnehmendes Teil und ein zylindrisches oder konisches aufgenommenes Teil (100) zur Definition eines Spritzgießformhohlraums umfasst, wobei das aufgenommene Teil (100) eine periphere erste Oberfläche aufweist, welche die Innenfläche der peripheren Seitenwand definiert, wobei die erste Oberfläche (110) eine Mehrzahl von Einkerbungen (9) entlang der Peripherie zur Ausbildung von Vorsprüngen (8) auf der peripheren Seitenwand (46) während des Spritzgießens aufweist und wobei die Einkerbungen derart sind, dass sie dem aufgenommenen Teil eine 3D-Rauigkeit Rₐ von mehr als ca. 15 µm und maximal 70 µm verleihen, oder wobei die Einkerbungen eine Tiefe von 0,1 mm-0,35 mm aufweisen.

13. Form nach Anspruch 12, wobei die erste Oberfläche (110) eine 3D-Rauigkeit Rₐ von mehr als 20 µm, bevorzugter mehr als 40 µm und besonders bevorzugt mehr als 53 µm, zum Definieren der Vorsprünge (8) aufweist.

14. Form nach Anspruch 12 oder 13, wobei wenigstens ein Bereich, vorzugsweise die gesamte Fläche, der ersten Oberfläche (110) die Einkerbungen (9) aufweist.

15. Form nach einem der Ansprüche 12-14, wobei die erste Oberfläche (110) eine 3D-Rauigkeit Rₐ von mindestens 40 µm und höchstens 70 µm aufweist.

16. Form nach einem der Ansprüche 12-15, wobei die erste Oberfläche (110) die Rauigkeit Rₐ nur in einem Bereich aufweist, der von einem den Rand (47) ausbildenden peripheren Bereich (A) entfernt ist.

17. Form nach Anspruch 12, wobei die Einkerbungen (9) alle die gleiche Tiefe oder im Wesentlichen die gleiche Tiefe aufweisen.

18. Form nach einem der vorangehenden Ansprüche 12-17, wobei das aufgenommene Teil (100) eine die erste Oberfläche (110) ausbildende Schablone (112) aufweist.

19. Form nach einem der vorangehenden Ansprüche 12-18, wobei die Einkerbungen (9) durch Sandstrahlen oder Ätzen des aufgenommenen Teils (100) bereitgestellt sind.

20. Form nach einem der Ansprüche 12-19, wobei das aufgenommene Teil eine Mittelachse (C) aufweist, wobei die erste Oberfläche (110) konisch und bezogen auf die Mittelachse (C) mit einem Winkel von 1° - 3° geneigt ist.

21. Verfahren zur Herstellung eines Behälters mit einem Boden und einer peripheren Seitenwand, die sich von dem Boden aus erstreckt und dem Boden gegenüber einen peripheren Rand definiert, wobei die Seitenwand Verbindungsmittel zur dichten Anbringung eines Kunststoffdeckels an dem Behälter aufweist, wobei der Deckel und die Seitenwand in einem dem Rand benachbarten peripheren Dichtungsbereich dicht aneinander anliegen, wenn der Deckel am Behälter angebracht ist, wobei die Seitenwand (46) auf ihren der Innenseite des Behälters zugewandten Oberflächen eine Reihe von Vorsprüngen aufweist, wobei die Vorsprünge (8) auf der Seitenwand eine Reihe von Seitenwandaussparungen (9) definieren und in dem Spritzgießverfahren einstückig ausgebildet werden, indem der die Behälterseitenwand ausbildende Kunststoff derart in in der Spritzgießform ausgebildete Formaussparungen (9) fließt, dass wenigstens ein Bereich, vorzugsweise die gesamte Fläche, der der Innenseite des Behälters zugewandten Oberflächen eine 3D-Rauigkeit Rₐ von mehr als ca. 15 µm aufweist und
a) die Aussparungen (9) der Seitenwand (46) eine Tiefe (R) von 0,1 mm - 0,35 mm aufweisen oder
b) wenigstens ein Bereich, vorzugsweise die gesamte Fläche, der der Innenseite des Behälters zugewandten Oberflächen eine 3D-Rauigkeit Rₐ von höchstens 70 µm aufweist.

## Revendications

1. Emballage (1) comprenant un récipient (40) en matière plastique moulé par injection et un couvercle (10) en matière plastique, ledit récipient (40) ayant un fond (42) et une paroi périphérique latérale (46) s'étendant dudit fond et définissant, à l'opposé dudit fond, un rebord périphérique (47), ladite paroi latérale ayant des moyens de liaison (26) pour fixer ledit couvercle en matière plastique (10) audit récipient de manière étanche, ledit couvercle et ladite paroi latérale s'appuyant étroitement l'un sur l'autre dans une zone d'étanchéité périphérique (A) adjacente audit rebord (47) lorsque ledit couvercle est fixé audit récipient, dans lequel le couvercle et la paroi latérale ont, sur leurs surfaces en regard de l'intérieur de l'emballage (1), un certain nombre de saillies (8), lesdites saillies (8) sur ladite paroi latérale définissant un certain nombre de cavités de paroi latérale (9) et étant formées d'une seule pièce dans le procédé de moulage par extrusion par la matière plastique formant la paroi latérale (46) du récipient qui s'écoule dans des cavités du moule formées dans ledit moule par injection de sorte que :
au moins une zone, de préférence toute la zone, desdites surfaces tournées vers l'intérieur de l'emballage ait une rugosité 3D Rₐ supérieure à environ 15 µm et dans lequel :
a) lesdites cavités (9) de la paroi latérale (46) ont une profondeur (R) de 0,1 mm à 0,35 mm ou
b) au moins une zone, de préférence toute la zone, desdites surfaces de la paroi latérale périphérique tournées vers l'intérieur de l'emballage a une rugosité 3D Rₐ au maximum de 70 µm.

2. Emballage selon la revendication 1, **caractérisé en ce qu'**au moins une zone, de préférence toute la zone, desdites surfaces tournées vers l'intérieur de l'emballage a une rugosité 3D Rₐ au minimum de 40 µm et au maximum de 70 µm.

3. Emballage selon l'une quelconque des revendications précédentes, **caractérisé en ce que** le couvercle (10) est moulé par injection.

4. Emballage selon l'une quelconque des revendications précédentes, lesdites saillies (8) étant sensiblement identiques ou identiques en forme et étant uniformément distribuées sur lesdites surfaces.

5. Emballage selon l'une quelconque des revendications précédentes, ladite zone d'étanchéité périphérique (A) se trouvant à l'intérieur de ladite paroi latérale (46).

6. Emballage selon l'une quelconque des revendications précédentes, lesdites saillies (8) sur ladite paroi latérale (46) étant formées uniquement dans la zone s'étendant de ladite zone d'étanchéité périphérique (A) vers ledit fond (42).

7. Emballage selon la revendication 5 ou la revendication 6, ledit couvercle (10) comprenant une rainure périphérique (20) pour recevoir ledit rebord périphérique (47), ladite rainure (20) étant définie par une paroi de petit rayon (22) et une paroi de plus grand rayon (24), ladite paroi de petit rayon (22) définissant au moins en partie, conjointement avec ladite paroi latérale (46), ladite zone d'étanchéité périphérique (A), ladite paroi de petit rayon (22) ayant, à l'extérieur de ladite zone d'étanchéité périphérique (A), une surface grossière ayant une rugosité 3D Rₐ au minimum de 10µm et au maximum de 20 µm.

8. Emballage selon l'une quelconque des revendications précédentes, ledit récipient ayant un axe central (C) s'étendant essentiellement perpendiculairement audit fond (42), ladite paroi latérale périphérique (46) étant conique et s'inclinant sous un angle par rapport audit axe central (C) de 0,2 à 5°, de préférence de 1 à 3°, avec le récipient (40) ayant le plus petit rayon au niveau dudit fond (42).

9. Emballage selon l'une quelconque des revendications précédentes, lesdites saillies (8) sur ladite paroi latérale (46) étant généralement orientées dans la direction dudit axe central (C).

10. Emballage selon l'une quelconque des revendications précédentes, lesdites cavités (9) ayant toutes essentiellement la même profondeur (R) ou la même profondeur.

11. Emballage selon l'une quelconque des revendications précédentes, lesdites saillies (8) ayant une configuration en forme de barbillon.

12. Moule de moulage par injection d'un récipient de peinture (40) ayant un fond et une paroi latérale périphérique (46) s'étendant dudit fond et définissant à l'opposé dudit fond un rebord périphérique, ladite paroi latérale ayant des moyens de liaison périphériques pour fixer un couvercle en matière plastique au récipient, ledit moule comprenant une partie femelle et une partie mâle cylindrique ou conique (100) pour définir une cavité de moule à injection, dans lequel ladite partie mâle (100) a une première surface périphérique définissant la surface interne de ladite paroi latérale périphérique, ladite première surface (110) ayant une pluralité d'indentations (9) le long de la périphérie pour former des saillies (8) sur ladite paroi latérale périphérique (46) au cours du moulage par injection et dans lequel les indentations sont telles qu'elles assurent à la partie mâle une rugosité 3D Rₐ de plus d'environ 15 µm et de pas plus de 70 µm ou dans lequel les indentations ont une profondeur de 0,1 mm à 0,35 mm.

13. Moule selon la revendication 12, ladite première surface (110) ayant une rugosité 3D Ra supérieure à 20 µm, mieux encore supérieure à 40 µm et, bien mieux encore supérieure à 53 µm, pour définir lesdites saillies (8).

14. Moule selon la revendication 12 ou 13, au moins une zone, de préférence toute la zone, de ladite première surface (110) ayant lesdites indentations (9).

15. Moule selon l'une quelconque des revendications 12 à 14, ladite première surface (110) ayant une rugosité 3D Ra au minimum de 40 µm et au maximum de 70 µm.

16. Moule selon l'une quelconque des revendications 12 à 15, ladite première surface (110) ayant la rugosité 3D Ra uniquement dans une zone distante d'une région périphérique (A) formant ledit rebord (47).

17. Moule selon la revendication 12, lesdites indentations (9) ayant toutes la même profondeur ou essentiellement la même profondeur.

18. Moule selon l'une quelconque des revendications précédentes, ladite partie mâle (100) ayant un gabarit (112) formant ladite première surface (110).

19. Moule selon l'une quelconque des revendications 12 à 18, lesdites indentations (9) étant formées par sablage ou gravure de ladite partie mâle (100).

20. Moule selon l'une quelconque des revendications 12 à 19, ladite partie mâle ayant un axe central (C), ladite première surface étant conique et s'inclinant sous un angle par rapport audit axe central (C) de 1 à 3 °.

21. Procédé de fabrication d'un récipient ayant un fond et une paroi périphérique latérale s'étendant dudit fond et définissant, à l'opposé dudit fond, un rebord périphérique, ladite paroi latérale ayant des moyens de liaison pour fixer un couvercle en matière plastique audit récipient de manière étanche, ledit couvercle et ladite paroi latérale s'appuyant étroitement l'un sur l'autre dans une zone d'étanchéité périphérique adjacente audit rebord lorsque ledit couvercle est fixé audit récipient, dans lequel la paroi latérale (46) a, sur ses surfaces en regard de l' intérieur du récipient, un certain nombre de saillies, lesdites saillies (8) sur ladite paroi latérale définissant un certain nombre de cavités de paroi latérale (9) et étant formées d'une seule pièce dans le procédé de moulage par injection par la matière plastique formant la paroi latérale du récipient qui s'écoule dans les cavités du moule (9) formées dans ledit moule par injection de sorte qu'au moins une zone, de préférence toute la zone, desdites surfaces tournées vers l'intérieur du récipient ait une rugosité 3D Rₐ supérieure à environ 15 µm et dans lequel :
a) lesdites cavités (9) de la paroi latérale (46) ont une profondeur (R) de 0,1 mm à 0,35 mm ou
b) au moins une zone, de préférence toute la zone, desdites surfaces tournées vers l'intérieur du récipient a une rugosité 3D Rₐ au maximum de 70 µm.
